**Europäisches Patentamt**

**European Patent Office**

**Office européen des brevets**

(19)

(11) Veröffentlichungsnummer: **0 346 649**

**A1**

# EUROPÄISCHE PATENTANMELDUNG

(12)

(21) Anmeldenummer: **89109191.0**

(22) Anmeldetag: **22.05.89**

(51) Int. Cl.⁴: **B01D 53/08**

(30) Priorität: **03.06.88 DE 3818911**

(43) Veröffentlichungstag der Anmeldung:
**20.12.89 Patentblatt 89/51**

(84) Benannte Vertragsstaaten:
**DE FR GB NL**

(71) Anmelder: **HELLMICH GmbH & Co. KG**
**Holtkampweg 13**
**D-4983 Kirchlengern 3(DE)**

(72) Erfinder: **Steinmeier, Dietrich**
**Handwerkerstrasse 28**
**D-4986 Rödinghausen(DE)**

(74) Vertreter: **Patentanwälte Dipl.-Ing. Bodo**
**Thielking Dipl.-Ing. Otto Elbertzhagen**
**Gadderbaumer Strasse 20**
**D-4800 Bielefeld 1(DE)**

(54) **Sorptionseinrichtung zum Reinigen von Abgasen.**

(57) Eine Sorptionseinrichtung mit einem Vorratsbehälter und einem Reaktionsbehälter besitzt eine Reihe von Gasleiteinrichtungen für das eintretende Rohgas. Das Reingas wird oberhalb des Rohgaseintritts (12) an einem Reingasaustritt (13) abgeführt, der kurz unterhalb eines Trennbodens (10) zwischen Vorratsraum (2) und Reaktionsraum (3) liegt. Der Trennboden (10) besitzt Durchlässe (20) für das von oben nachfließende Sorptionsmaterial. Um die Durchlässe herum entstehen Hohlräume, welche sämtlich mit dem Reingasaustritt (13) in Verbindung stehen. Bei der neuen Sorptionseinrichtung ist sichergestellt, daß das Rohgas stets auf frisches Sorptionsmaterial trifft. Das zu reinigende Gas wird dabei weitgehend im Gegenstrom zum Sorptionsmaterial geführt.

Fig. 1

EP 0 346 649 A1

## Sorptionseinrichtung zum Reinigen von Abgasen

Die Erfindung betrifft eine Sorptionseinrichtung nach dem Oberbegriff des Anspruchs 1.

Bei bekannten Sorptionseinrichtungen dieser Art (DE-PS 3344 571) sind die Gasleiteinrichtungen Kaskadenbleche, welche reihenweise übereinander versetzt angeordnet sind. Die eine Hälfte der von ihnen gebildeten Hohlräume ist mit dem Rohgaseintritt und die andere Hälfte der Hohlräume ist mit dem Reingasaustritt verbunden. Bei der bekannten Sorptionsanlage sind mehrere Reihen von Kaskadenflächen übereinander vorgesehen. Das Sorptionsmaterial wird im Kreuzstrom durchströmt. Das Rohgas tritt gleichzeitig in zahlreichen übereinander angeordneten Kaskaden bzw. davon gebildeten Hohlräumen in das Sorptionsmaterial ein und das Reingas wird gleichzeitig über den Reingasaustritt abgeführt. Das Sorptionsmaterial wird von oben nach unten durch den Reaktions raum durchgesetzt. Dabei ergibt sich die zwangsläufige Folge, daß lediglich das durch die obere Kaskadenreihe zutretende Rohgas stets mit frischem Sorptionsmaterial in Berührung kommt. Das durch die weiter unten angeordneten Kaskadenreihen gleichzeitig eintretende Rohgas kommt mit teilweise oder nahezu vollständig verbrauchtem Sorptionsmaterial in Berührung. Dies hat zur Folge, daß die bekannte Vorrichtung in vielen Fällen einen unzureichenden Abscheidegrad für im Rohgas enthaltene Stäube und Schadstoffe aufweist.

Ausgehend von diesem Stand der Technik liegt der Erfindung die Aufgabe zugrunde, eine Sorptionseinrichtung der als bekannt vorausgesetzten Art so auszubilden, daß ein besonders hoher Abscheidegrad erzeugt wird und das in den Reaktionsraum eingeführte Rohgas stets mit frischem Sorptionsmaterial in Berührung kommt.

Die Lösung dieser Aufgabe erfolgt erfindungsgemäß mit den Merkmalen des Anspruchs 1.

Die erfindungsgemäße Vorrichtung erzeugt mit einfachen Mitteln besonders gute Abscheidungswirkungen. Dabei ist es durch die Wahl von Größe, Anordnung und Abständen der Durchlässe möglich, unterschiedlich große zweite Hohlräume zu schaffen, die mit dem Reingasaustritt in Verbindung stehen. Die Schaffung eines vergleichsweise großen Gesamtvolumens der zweiten Hohlräume hat zur Folge, daß die Durchströmungsgeschwindigkeit gering gehalten werden kann. Hierdurch wird die Abscheidewirkung begünstigt.

Bei einer bevorzugten Ausführungsform der Erfindung sind die Durchlässe durch sich in den Reaktionsraum erstreckende Rohrstutzen gebildet, welche Durchlaßöffnungen im Trennboden umschließen.

Durch das Vorsehen von Rohrstutzen steht ein weiterer Parameter für die Bestimmung des Gesamtvolumens der zweiten Hohlräume zur Verfügung, der neben den Parametern Querschnitt sowie Anordung bzw. Abstand der Durchlässe gewählt werden kann.

Die zweiten Hohlräume umschließen vorzugsweise die Durchlässe jeweils vollständig.

Als besonders zweckmäßig hat es sich erwiesen, daß die Rohrstutzen rechteckigen bzw. quadratischen Querschnitt aufweisen. Eine solche Querschnittsform eignet sich insbesondere bei rechteckiger bzw. quadratischer Grundfläche des Behälters bzw. des Reaktionsraums.

Die Gasleiteinrichtungen sind vorzugsweise bekannte Kaskadenbleche.

Nachstehend wird eine bevorzugte Ausführungsform der Erfindung anhand der Zeichnung im einzelnen beschrieben.

Es zeigen:

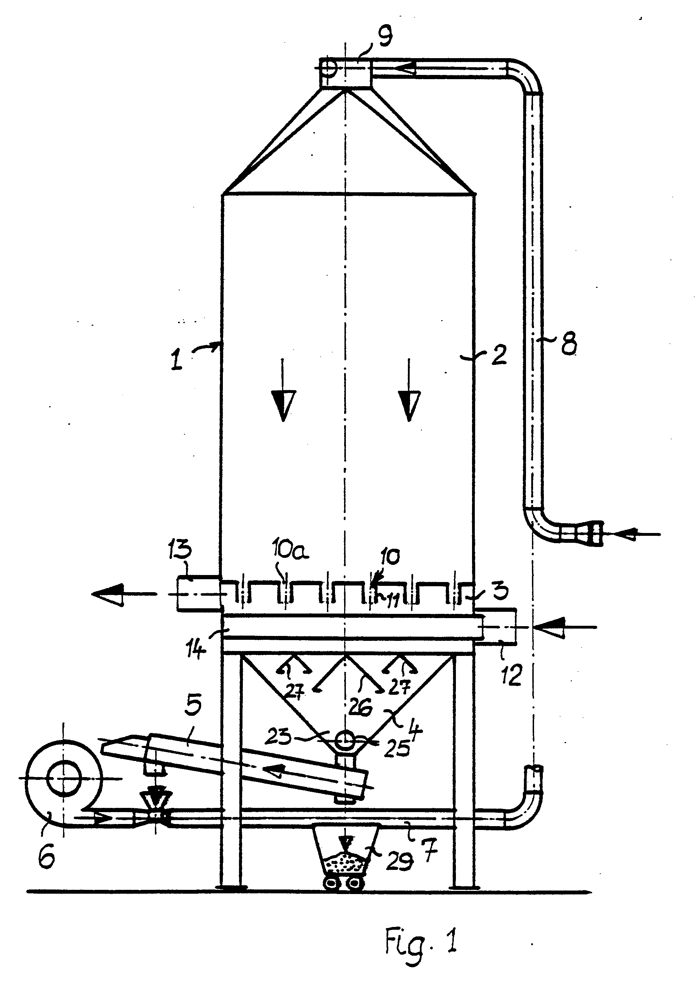

Figur 1 einen schematischen Vertikalschnitt durch die erfindungsgemäße Sorptionseinrichtung,

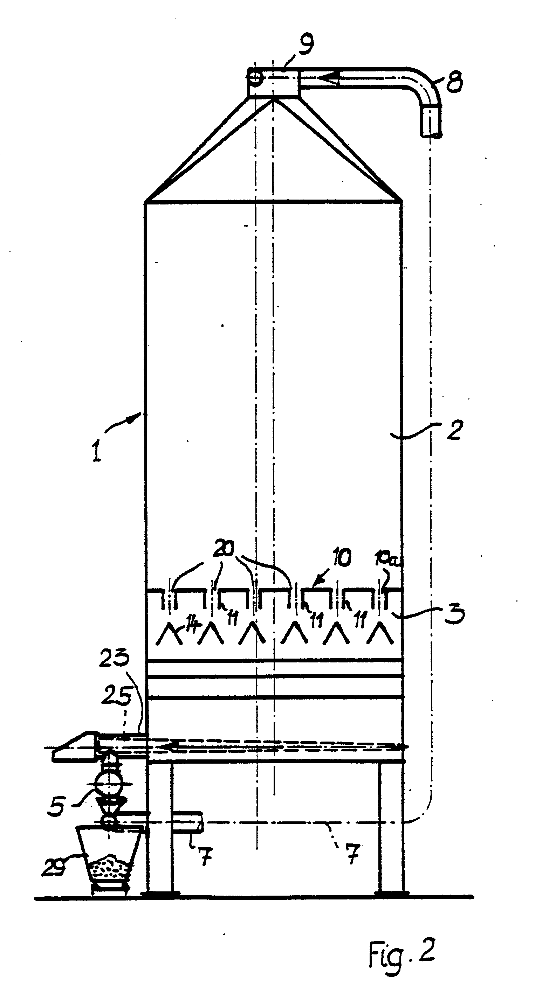

Figur 2 einen Vertikalschnitt in einer um 90 Grad zu der Schnittebene gemäß Figur 1 versetzten Vertikalebene,

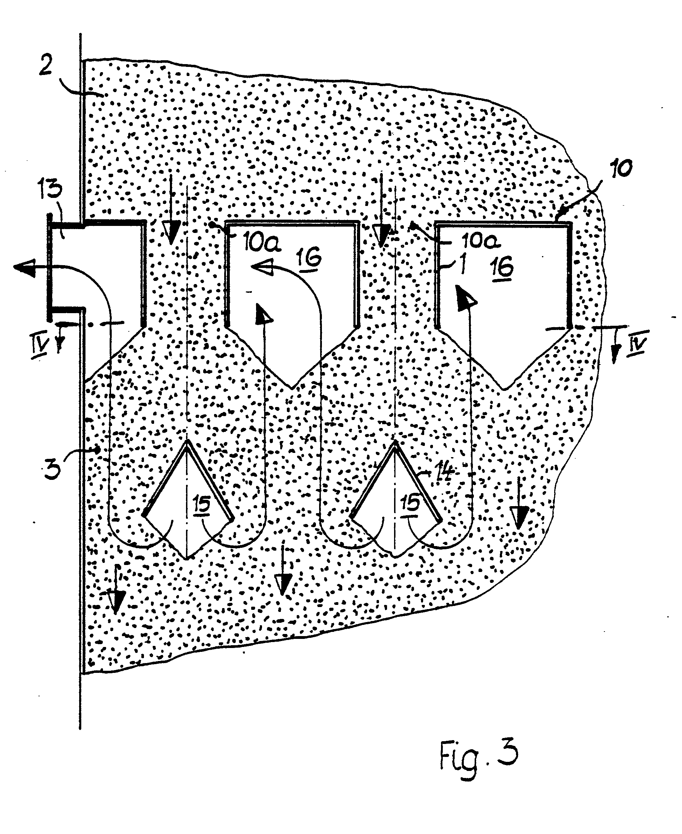

Figur 3 einen Schnitt durch einen Teilbereich des Reaktionsraums,

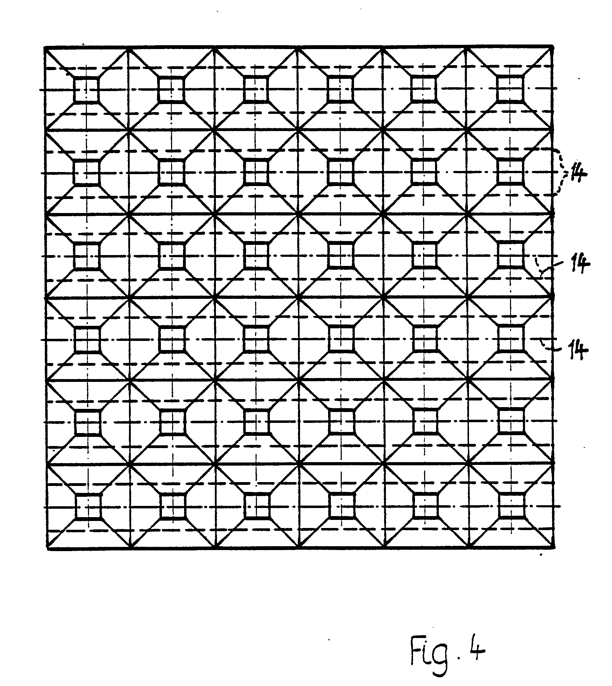

Figur 4 einen schematischen horizontalen Schnitt durch den Reaktionsraum entlang Schnittebene IV-IV gemäß Figur 3.

Im dargestellten Ausführungsbeispiel sind in einem gemeinsamen Behälter 1 ein Vorratsraum 2 für das Sorptionsmaterial und ein ebenfalls mit Sorptionsmaterial gefüllter Reaktionsraum 3 vorgesehen. An den unteren Bereich des Reaktionsraums 3 schließt sich ein Trichterteil 4 mit mehreren sich in Längsrichtung erstreckenden Kaskadenblechen 26 und 27 an. In einer Austragsrinne 23 läuft eine Förderschnecke 25 um, die sicherstellt, daß sich das Sorptionsmaterial im Reaktionsbehälter langsam von oben nach unten bewegt. Die im Trichterteil 4 vorgesehenen Kaskadenbleche 26 und 27 dienen zur Vergleichmäßigung des Fließverhaltens des Sorptionsmaterials. An den Austrag des Trichterteils 4 schließt sich eine Schältrommel 5 an. Diese Einrichtung dient in bekannter Weise zur Aufbereitung des Sorptionsmaterials bzw. zu dessen Trennung in seine gesättigten und in seine noch sorptionsfähigen Bestandteile. Die gesättigten Bestandteile des Sorptionsmaterials werden von der Schältrommel 5 in ein Deponietransportgefäß 29 abgeworfen, die übrigen Bestandteile gelangen in einen aus Gebläse 6 und Förderleitung 7 bestehenden Steigförderer. Die Förderleitung 7 mündet in eine Förderleitung 8, mit der frisches Sorptionsmaterial zugefördert wird, das über eine Aufgabeeinrichtung 9 in den Vorratsraum 2 des Behälters 1 eingesetzt wird.

Zwischen dem Vorratsraum 2 und dem Reaktionsraum 3 ist ein Trennboden 10 vorgesehen, der über seine gesamte Fläche gleichmäßig verteilte Durchlässe 20 aufweist. Die Durchlässe 20 bestehen im dargestellten Ausführungsbeispiel aus Durchlaßöffnungen 10a und sich an diese Durchlaßöffnungen dicht anschließende Rohrstutzen 11.

Das Rohgas tritt über den Rohgaseintritt 12 in den Reaktionsraum 3 ein und verläßt diesen Reaktionsraum durch den Reingasaustritt 13. Innerhalb des Reaktionsraums 3 sind als Kaskadenbleche ausgebildete, durchgängige Gasleiteinrichtungen 14 vorgesehen, die bis zur dem Rohgaseintritt gegenüberliegenden Wand des Behälters 1 durchlaufen. Unterhalb der Gasleiteinrichtungen sind erste Hohlräume 15 im Sorptionsmaterial gebildet. Das zu reinigende Gas tritt auf der gesamten Länge der Gasleiteinrichtungen durch die ersten Hohlräume 15 in das Sorptionsmaterial ein und erreicht nach dem Durchströmen des Sorptionsmaterials miteinander verbundene zweite Hohlräume 16, die unterhalb der Durchlässe 20 rings um die Rohrstutzen 11 gebildet sind. Diese zweiten Hohlräume 16 stehen sämtlich mit dem Reingasaustritt 13 in Verbindung. Die Größe der zweiten Hohlräume hängt von verschiedenen Parametern ab. Neben dem Schüttwinkel des Sorptionsmaterials spielen Größe, Anordnung und Form der Durchlaßöffnungen 10a sowie die Länge der sich an die Durchlaßöffnungen anschließenden Rohrstutzen 11 eine Rolle.

**Ansprüche**

1. Sorptionseinrichtung zum Reinigen von Abgasen, mit einem Behälter, in dem sich das Sorptionsmaterial befindet, durch das das zu reinigende Rohgas geleitet wird, welches über einen Rohgaseintritt in den Behälter eingesetzt und durch einen Reingasaustritt aus dem Behälter abgeführt wird, wobei der Behälter eine Abfuhreinrichtung für gebrauchtes Sorptionsmaterial und eine Zufuhreinrichtung für frisches Sorptionsmaterial aufweist und wobei ein Reaktionsraum mit nach oben geschlossenen Gasleiteinrichtungen vorgesehen sind, die innerhalb des Sorptionsmaterials erste Hohlräume bilden, welche mit dem Rohgaseintritt verbunden sind, wobei oberhalb dieser ersten Hohlräume weitere zweite Hohlräume im Sorptionsmaterial vorgesehen sind, die mit dem Reingasaustritt verbunden sind,
dadurch gekennzeichnet,
daß mit Abstand oberhalb der Gasleiteinrichtung (14) sowie oberhalb des Reingasaustritts (13) ein den Reaktionsraum (3) nach oben abschließender Trennboden (10) im Behälter (1) vorgesehen ist, der Durchlässe (20) für oberhalb des Trennbodens (10) in einem Vorratsraum (2) gelagertes Sorptionsmaterial aufweist, wobei die Durchlässe (20) zum Durchtritt des im Vorratsraum (2) befindlichen Sorptionsmaterials in den Reaktionsraum (3) ausgebildet sind und die zweiten Hohlräume (16) die Durchlaßöffnungen (10a) zumindest teilweise umgebende, miteinander verbundene Hohlräume sind.

2. Sorptionseinrichtung nach Anspruch 1,
dadurch gekennzeichnet,
daß die Durchlässe (20) durch Durchlaßöffnungen (10a) im Trennboden (10) umschließende, sich in den Reaktionsraum (3) erstreckende Rohrstutzen (11) gebildet sind.

3. Sorptionseinrichtung nach Anspruch 1 oder 2,
dadurch gekennzeichnet,
daß die zweiten Hohlräume (16) die Durchlässe (20) jeweils vollständig umschließen.

4. Sorptionseinrichtung nach einem oder mehreren der Ansprüche 1 bis 3,
dadurch gekennzeichnet,
daß die Rohrstutzen (11) rechteckigen Querschnitt aufweisen.

5. Sorptionseinrichtung nach Anspruch 4,
dadurch gekennzeichnet,
daß die Rohrstutzen (11) quadratischen Querschnitt aufweisen.

6. Sorptionseinrichtung nach einem oder mehreren der Ansprüche 1 bis 5,
dadurch gekennzeichnet,
daß die nach oben geschlossenen Gasleiteinrichtungen (14) Kaskadenbleche sind.

7. Sorptionseinrichtung nach einem oder mehreren der Ansprüche 1 bis 6,
dadurch gekennzeichnet,
daß der Vorratsraum (2) und der Reaktionsraum (3) in einem gemeinsamen Behälter (1) angeordnet sind.

Fig. 1

Fig. 2

Fig. 3

Fig. 4

Europäisches Patentamt

EUROPÄISCHER RECHERCHENBERICHT

Nummer der Anmeldung

EP 89 10 9191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 700 768 (H. GROCHOWSKI) <br> * Figur 1; Seite 12, Zeilen 23-27 * <br> --- | 1-7 | B 01 D 53/08 |
| X,P | EP-A-0 290 870 (SIEMENS) <br> * Figur 1 * <br> --- | 1-5,7 | |
| A,D | DE-A-3 344 571 (F. HELLMICH) <br> * Figuren 2,3 * <br> --- | 1-7 | |
| A,P | DE-C-3 712 649 (R. OHLMANN) <br> * Figuren 1-3 * <br> --- | 1-7 | |
| A | EP-A-0 085 848 (KRAFTWERK UNION AG) <br> * Figur 1 * <br> ----- | | |

RECHERCHIERTE SACHGEBIETE (Int. Cl.4)

B 01 D
B 01 J

Der vorliegende Recherchenbericht wurde für alle Patentansprüche erstellt

| Recherchenort | Abschlußdatum der Recherche | Prüfer |
|---|---|---|
| DEN HAAG | 27-09-1989 | KANOLDT W.W. |